# EUROPÄISCHE PATENTANMELDUNG

(11) **EP 2 527 182 A1**
(43) Veröffentlichungstag der Anmeldung: **28.11.2012**
(21) Anmeldenummer: 11167600.3
(22) Anmeldetag: 26.05.2011
(51) Int. Cl.: B60L 3/00

(54) **Diagnose eines Drehgebers**

(71) Anmelder: SIEMENS AKTIENGESELLSCHAFT, 80333 München (DE)
(72) Erfinder: Zatocil, Heiko, 90429 Nürnberg (DE)

(57) **Zusammenfassung**

Die Sicherheit eines elektrischen Antriebssystems soll ohne größeren Aufwand erhöht werden. Dazu wird ein Fahrzeug mit mindestens einem Rad (1), einem Elektromotor (3), der zum Antrieb des Fahrzeugs mit dem mindestens einen Rad (1) mechanisch gekoppelt ist, und einem Drehgeber (4) zum Erfassen einer Drehgeschwindigkeit und/oder eines Drehwinkels des Elektromotors (3) bereitgestellt. Außerdem weist das Fahrzeug einen Radsensor (2) an dem mindestens einen Rad (1) zum Liefern eines Geschwindigkeitssignals betreffend die Drehgeschwindigkeit des mindestens einen Rads (1) auf. Ferner besitzt das Fahrzeug eine Auswerteeinrichtung (5) zum Überprüfen der Plausibilität der von dem Drehgeber (4) erfassten Drehgeschwindigkeit des Elektromotors (3) mittels des Geschwindigkeitssignals (n₁ bis n₄) des Radsensors (2).

## Beschreibung

Die vorliegende Erfindung betrifft ein Fahrzeug mit mindestens einem Rad, einem Elektromotor, der zum Antrieb des Fahrzeugs mit dem mindestens einem Rad mechanisch gekoppelt ist, und einem Drehgeber zum Erfassen einer Drehgeschwindigkeit und/oder eines Drehwinkels des Elektromotors. Darüber hinaus betrifft die vorliegende Erfindung ein Verfahren zum Betreiben eines Fahrzeugs mit mindestens einem Rad und einem Elektromotor, der zum Antrieb des Fahrzeugs mit dem mindestens einen Rad mechanisch gekoppelt ist, wobei eine Drehgeschwindigkeit und/oder ein Drehwinkel des Elektromotors erfasst wird.

Elektrisch betriebene Fahrzeuge und Hybridfahrzeuge besitzen als Antriebsaggregat einen Elektromotor. Dieser wird in der Regel als dreiphasiger Motor ausgebildet. Gespeist wird der Motor meist von einer Hochvoltbatterie, die eine Gleichspannung beziehungsweise einen Gleichstrom liefert. Der Gleichstrom wird mithilfe eines Wechselrichters in einen dreiphasigen Wechselstrom gewandelt.

Zur Regelung des Elektromotors wird dessen Drehzahl und/oder Drehwinkel durch einen Drehgeber abgegriffen. Das Drehzahlsignal wird dann in üblicher Weise zur Ansteuerung des Wechselrichters benutzt. Der Betrieb des Elektromotors hängt damit wesentlich von der Qualität und Funktionsfähigkeit des Drehgebers ab.

Aus Gründen der Antriebssicherheit ist es nötig, die Funktionsfähigkeit des Drehgebers während des Betriebs des Fahrzeugs zu überprüfen. Im Fall von Fehlfunktionen des Drehgebers kann der Antrieb in einen sicheren Betriebszustand überführt werden. Für die Überprüfung des von dem Drehgeber übertragenen Winkels oder der übertragenen Geschwindigkeit beziehungsweise Drehzahl werden jedoch zusätzliche Informationen benötigt.

Bisher wurde die Funktionsfähigkeit des Gebersystems anhand der Analogsignale des Gebers (z.B. Sin/Cos-Geber oder Resolver) überprüft. Es kann dabei nur überprüft werden, ob die Geberelektronik noch richtig arbeitet. Bei einem Rutschen oder einer mechanischen Blockade des Gebers würde die Überwachung nicht ansprechen.

Aus der Druckschrift DE 33 17 294 A1 ist ein Verfahren und eine Vorrichtung zum Betrieb einer stromrichtergespeisten Drehfeldmaschine mit Stromeinprägung und Schlupfsteuerung bekannt. Für den Anlauf aus dem Stillstand oder bei niedrigen Drehzahlen wird häufig die Regelung abgeschaltet und die Maschine gesteuert betrieben, indem die Frequenz des Umrichters direkt durch die Summe eines gemessenen Drehzahl-Istwerts und des dem Wirkstromsollwert proportionalen Schlupffrequenz-Sollwerts gesteuert wird. Zur Erfassung des Drehzahl-Istwerts kann ein einfacher Drehgeber oder ein anderes Messglied, das die Drehzahl nur betragsmäßig zu erfassen gestattet, verwendet werden.

Darüber hinaus offenbart die Patentschrift DE 197 47 093 C2 eine elektrisch betätigte Bremsanlage. Die Bremsanlage besitzt einen Bremswertgeber, Bremsaktoren und Raddrehzahlsensoren an mindestens einem Teil der Räder des Kraftfahrzeugs. Darüber hinaus besitzt die Bremsanlage ein elektronisches Steuergerät, durch das aus den Signalen der Raddrehzahlsensoren der Radschlupf und die Radbeschleunigung für jedes Rad berechnet werden.

Die Aufgabe der vorliegenden Erfindung besteht darin, die Funktionsfähigkeit eines Drehgebers eines elektrischen Antriebsstrangs eines Fahrzeugs mit wenig Aufwand zuverlässig überprüfen zu können.

Erfindungsgemäß wird diese Aufgabe gelöst durch ein Fahrzeug mit mindestens einem Rad, einem Elektromotor, der zum Antrieb des Fahrzeugs mit dem mindestes einen Rad mechanisch gekoppelt ist, und einem Drehgeber zum Erfassen einer Drehgeschwindigkeit und/oder eines Drehwinkels des Elektromotors, sowie umfassend einen Radsensor an dem mindestens einen Rad zum Liefern eines Geschwindigkeitssignals betreffend die Drehgeschwindigkeit des mindestens einen Rads und eine Auswerteeinrichtung zum Überprüfen der Plausibilität der von dem Drehgeber erfassten Drehgeschwindigkeit bzw. des erfassten Drehwinkels des Elektromotors mittels des Geschwindigkeitssignals des Radsensors.

Darüber hinaus wird erfindungsgemäß bereitgestellt ein Verfahren zum Betreiben eines Fahrzeugs mit mindestens einem Rad und einem Elektromotor, der zum Antrieb des Fahrzeugs mit dem mindestes einen Rad mechanisch gekoppelt ist, durch Erfassen einer Drehgeschwindigkeit und/oder eines Drehwinkels des Elektromotors, Liefern eines Geschwindigkeitssignals betreffend die Drehgeschwindigkeit des mindestens einen Rads und Überprüfen der Plausibilität der erfassten Drehgeschwindigkeit bzw. des erfassten Drehwinkels des Elektromotors mittels des Geschwindigkeitssignals des Rads.

In vorteilhafter Weise kann die Plausibilität des Drehgebers, der eine Drehgeschwindigkeit und/oder einen Drehwinkel zur Regelung des Elektromotors liefert, auf einfache Weise durch die Geschwindigkeitssignale von Radsensoren überprüft werden, welche in den meisten Fahrzeugen ohnehin verbaut sind. Es ist also für die Überprüfung des Drehgebers nicht notwendig, in das Fahrzeug ein zusätzliches redundantes System einzubauen. Vielmehr kann auf ein vorhandenes System zurückgegriffen werden.

Vorzugsweise besitzt das Fahrzeug ein ABS-System, wobei der Radsensor Teil des ABS-Systems ist. Es wird also somit ein Radsensor des Antiblockiersystems zur Überprüfung der Plausibilität des Drehgebersignals verwendet. Analog hierzu kann auch beispielsweise ein Radsensor einer Anti-Schlupf-Regelungseinheit verwendet werden, um den Drehgeber des elektrischen Antriebs zu überprüfen.

In einer speziellen Ausführungsform weist das Fahrzeug zwei oder vier angetriebene Räder auf, wobei jedes Rad einen separaten Radsensor besitzt, und Signale aller Radsensoren zur Überprüfung der Plausibilität in der Auswerteeinrichtung herangezogen werden. Damit können auch unterschiedliche Radgeschwindigkeiten berücksichtigt werden, die sich beispielsweise bei einem Differenzialgetriebe oder bei einem Allradantrieb einstellen.

Speziell kann der Drehgeber ein Resolver sein. Derartige Drehgeber sind robust und liefern zuverlässige Signale bei elektrischen Antrieben.

Des Weiteren kann der Elektromotor anhand der erfassten Drehgeschwindigkeit bzw. des erfassten Drehwinkels geregelt werden. Damit können zuverlässig die gewünschten Drehzahlen eingestellt werden.

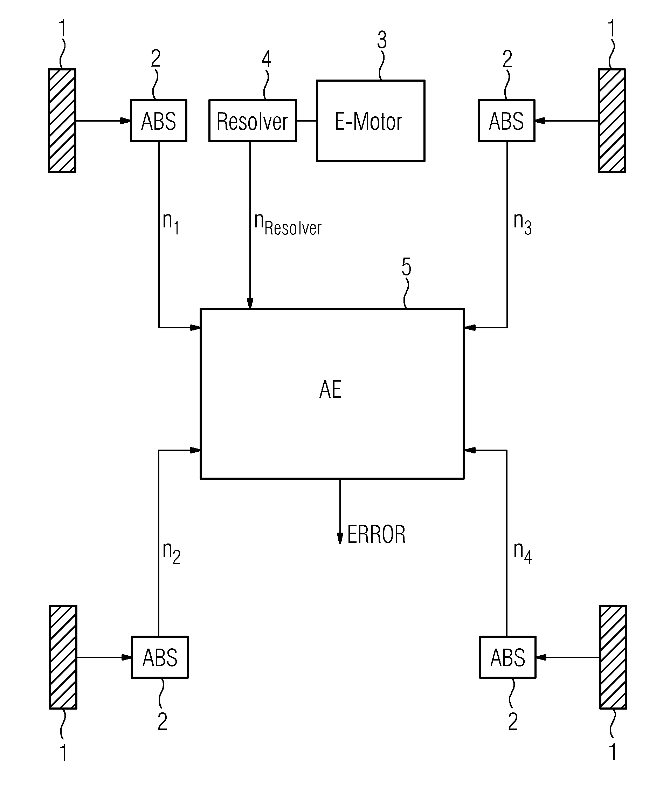

Die vorliegende Erfindung wird nun anhand der beigefügten Zeichnung näher erläutert, die ein Blockschaltbild eines Fahrzeugs mit für die Erfindung wichtigen Komponenten wiedergibt.

Die nachfolgend näher geschilderten Ausführungsbeispiele stellen bevorzugte Ausführungsformen der vorliegenden Erfindung dar.

In dem Beispiel der Figur ist ein Fahrzeug symbolisch mit seinen vier Rädern 1 dargestellt. Die vorliegende Erfindung ist aber auch auf Fahrzeuge anwendbar, die eine andere Anzahl an Rädern besitzt. Speziell kann sie beispielsweise bei Motorrädern, aber auch bei Lastkraftfahrzeugen mit mehr als vier Rädern Einsatz finden.

An jedem der Räder 1 ist hier ein Radsensor 2 angeordnet. Jeder dieser Radsensoren erfasst die Geschwindigkeit des jeweiligen Rads 1. Es ist jedoch unerheblich, ob tatsächlich jedes Rad 1 mit einem Radsensor 2 ausgestattet ist. Im vorliegenden Beispiel sind die Radsensoren 2 jeweils Teil eines Antiblockiersystems (ABS).

Radsensoren eines ABS-Systems haben die Aufgabe, dem ABS-Steuergerät die momentane Drehgeschwindigkeit jedes Rads zu signalisieren. Dazu wird typischerweise ein gezahntes Rad induktiv abgegriffen. Die Zähne liefern entsprechende Impulse, so dass bei Drehung des Rads eine Impulskette entsteht. Diese Impulskette kann in einer sensorinternen Vorverarbeitung in eine Drehzahl beziehungsweise Umdrehungsgeschwindigkeit n1, n2, n3 und n4 umgerechnet werden. Gegebenenfalls erfolgt die Umrechnung aber auch erst in der jeweils anschließenden Signalverarbeitungskomponente.

Das Fahrzeug besitzt in dem Beispiel der Figur einen Elektromotor 3, mit dem das Fahrzeug angetrieben werden kann. Es handelt sich dabei in der Regel um einen Dreiphasen-Motor, der von einer Hochvoltbatterie (nicht dargestellt) gespeist wird. Zur Umwandlung des von der Hochvoltbatterie gelieferten Gleichstroms in einen dreiphasigen Wechselstrom wird ein Wechselrichter eingesetzt, der in der Figur ebenfalls nicht eingezeichnet ist.

Zur Steuerung beziehungsweise Regelung der Drehgeschwindigkeit des Elektromotors 3 dient ein eigenes Steuergerät (hier ebenfalls nicht eingezeichnet), wobei die Istgröße für die Regelung durch einen Drehgeber 4 gewonnen wird. Dieser Drehgeber 4 erfasst also die Drehgeschwindigkeit und/oder den Drehwinkel des Rotors des Elektromotors 3.

Aus sicherheitstechnischen Gründen ist es notwendig, den Drehgeber zu überwachen. Der Drehgeber könnte nämlich beispielsweise einen Schlupf auf der Welle des Elektromotors 3 besitzen. Dieser Schlupf würde dazu führen, dass gegebenenfalls die Istgeschwindigkeit geringer signalisiert wird als sie tatsächlich ist. Dies würde dazu führen, dass die Regelung die Drehgeschwindigkeit des Elektromotors 3 erhöht. Damit könnten beispielsweise in Kurvenfahrten sehr gefährliche Situationen entstehen.

Zur Überwachung des Drehgebers 4 werden erfindungsgemäß die Signale der Radsensoren 2 verwendet. Die Umdrehungszahl der Räder 1 steht nämlich (zumindest bei angetriebenen Rädern) in der Regel in einem festen Verhältnis zur Umdrehungsgeschwindigkeit des Elektromotors 3. Im einfachsten Fall ist dieses Verhältnis lediglich durch das Getriebeverhältnis geprägt. Für den Fall, dass mehr Räder angetrieben werden ist in der Regel das Verhältnis zwischen der mittleren Drehzahl aller angetriebenen Räder und der Drehzahl des Elektromotors 3 konstant beziehungsweise fest vorgegeben. Dies aber bedeutet, dass die Funktion des Drehgebers 4 dadurch überwacht werden kann, dass die Drehzahl eines oder mehrerer Räder 1 beobachtet wird.

Im konkreten Beispiel der Figur wird als Drehgeber 4 ein Resolver verwendet. Dieser stellt einen bekannten elektromagnetischen Messumformer dar, der die Winkellage des Rotors des Elektromotors 3 in eine elektrische Größe wandelt. Der Resolver liefert im Prinzip ein Sinussignal und ein Kosinussignal von zwei um 90° versetzten Statorwicklungen. Der Rotor, der von den Statorwicklungen umschlossen ist, wird dabei mit einer sinusförmigen Wechselspannung erregt. Alternativ kann die Erregung auch am Stator vorgenommen und das entsprechende Sensorsignal am Rotor abgegriffen werden.

Aus dem Rohsignal des Resolvers beziehungsweise des Drehgebers 4 wird unmittelbar anschließend oder in einer nachgeschalteten Signalverarbeitungseinheit eine Drehzahl n_{Resolver} berechnet, die unter Berücksichtigung des Übersetzungsverhältnisses der Drehzahl des Rotors des Elektromotors 3 entsprechen sollte. Im Fehlerfall, wenn nämlich der Drehgeber 4 defekt ist, korrespondiert die Drehzahl n_{Resolver} nicht mit der Drehzahl des Elektromotors 3.

Zur Überprüfung der Funktionsfähigkeit des Drehgebers 4 ist eine Auswerteeinrichtung 5 vorgesehen. Sie nimmt hier nicht nur die Drehsignale n₁, n₂, n₃, n₄, sondern auch die Drehzahl n_{Resolver} des Drehgebers 4 auf. Handelt es sich wie hier beispielsweise um einen Vierradantrieb, so entspricht die mittlere Drehzahl aus den Drehzahlen n₁ bis n₄ einem Produkt aus der Drehzahl des Elektromotors 3 beziehungsweise der durch den Resolver gemessenen Drehzahl n_{Resolver} und einem Getriebeübersetzungsfaktor. Der Getriebeübersetzungsfaktor bei elektrisch betriebenen Fahrzeugen ist üblicherweise konstant. Daher kann leicht überprüft werden, ob die vom Resolver beziehungsweise Drehgeber 4 gelieferte Drehzahl n_{Resolver} stimmig ist. Stimmt nämlich die mittlere Drehzahl mit dem Produkt aus der Drehzahl n_{Resolver} und dem Getriebeübersetzungsfaktor überein, so ist die von Resolver gelieferte Drehzahl n_{Resolver} plausibel. Andernfalls, wenn keine Übereinstimmung besteht, wird ein entsprechendes Fehlersignal "ERROR" von der Auswerteeinrichtung 5 ausgeben.

Es ist jedoch nicht zwingend notwendig, dass die vom Resolver gelieferte Drehzahl n_{Resolver} und die mittlere Drehzahl der Räder in einem festen Verhältnis stehen. Gegebenenfalls sind bei der Auswertung die im Einzelfall vorliegenden Getriebeübersetzungsverhältnisse entsprechend zu berücksichtigen.

Gemäß einem anderen Ausführungsbeispiel kann es auch ausreichend sein, zur Überprüfung der Plausibilität des Drehgebersignals lediglich ein Drehzahlsignal von einem einzigen Radsensor 2 zu verwenden. Alternativ können aber auch beispielsweise zwei oder mehr Radsensoren beziehungsweise deren Signale zur Überprüfung des Drehgebersignals herangezogen werden.

Die in der Regel in einem Fahrzeug ohnehin vorhandenen Messwerte der ABS-Sensoren werden hier also zur Plausibilisierung des Drehgebersystems des Elektroantriebs herangezogen. Dadurch lässt sich die Sicherheit des Gesamtsystems ohne größeren Aufwand erhöhen. Insbesondere lässt sich dadurch ein Blockieren oder Rutschen des Gebersystems (Drehgeber 4) frühzeitig erkennen.

## Patentansprüche

1. Fahrzeug mit
- mindestens einem Rad (1),
- einem Elektromotor (3), der zum Antrieb des Fahrzeugs mit dem mindestes einen Rad (1) mechanisch gekoppelt ist, und
- einem Drehgeber (4) zum Erfassen einer Drehgeschwindigkeit und/oder eines Drehwinkels des Elektromotors (3),
**gekennzeichnet durch**
- einen Radsensor (2) an dem mindestens einen Rad (1) zum Liefern eines Geschwindigkeitssignals betreffend die Drehgeschwindigkeit des mindestens einen Rads (1) und
- eine Auswerteeinrichtung (5) zum Überprüfen der Plausibilität der von dem Drehgeber (4) erfassten Drehgeschwindigkeit des Elektromotors (3) mittels des Geschwindigkeitssignals des Radsensors (2).

2. Fahrzeug nach Anspruch 1, das ein ABS-System aufweist, wobei der Radsensor (2) Teil des ABS-Systems ist.

3. Fahrzeug nach Anspruch 1 oder 2, das zwei oder vier angetriebene Räder (1) aufweist, wobei das mindestens eine Rad eines davon ist, und wobei jedes Rad (1) einen separaten Radsensor (2) besitzt, und Signale aller Radsensoren zur Überprüfung der Plausibilität in der Auswerteeinrichtung (5) herangezogen werden.

4. Fahrzeug nach einem der vorhergehenden Ansprüche, wobei der Drehgeber (4) ein Resolver ist.

5. Fahrzeug nach einem der vorhergehenden Ansprüche, wobei der Elektromotor (3) anhand der erfassten Drehgeschwindigkeit oder des erfassten Drehwinkels geregelt wird.

6. Verfahren zum Betreiben eines Fahrzeugs mit mindestens einem Rad (1) und einem Elektromotor (3), der zum Antrieb des Fahrzeugs mit dem mindestes einen Rad (1) mechanisch gekoppelt ist, durch
- Erfassen einer Drehgeschwindigkeit und/oder eines Drehwinkels des Elektromotors (3),
**gekennzeichnet durch**
- Liefern eines Geschwindigkeitssignals betreffend die Drehgeschwindigkeit des mindestens einen Rads (1) und
- Überprüfen der Plausibilität der erfassten Drehgeschwindigkeit des Elektromotors (3) mittels des Geschwindigkeitssignals des Rads (1).

7. Verfahren nach Anspruch 6, wobei das Fahrzeug zwei oder vier angetriebene Räder (1) aufweist, wobei das mindestens eine Rad eines davon ist, und wobei jedes Rad (1) einen separaten Radsensor (2) besitzt, und Signale aller Radsensoren zur Überprüfung der Plausibilität herangezogen werden.

8. Verfahren nach Anspruch 6 oder 7, wobei der Elektromotor (3) anhand der erfassten Drehgeschwindigkeit und/oder des erfassten Drehwinkels geregelt wird.
